# EUROPEAN PATENT APPLICATION

(11) **EP 4 604 632 A1**
(43) Date of publication of application: **20.08.2025**
(21) Application number: 25152459.1
(22) Date of filing: 17.01.2025
(51) Int. Cl.: H04W 56/00

(54) **TRANSMISSIONS OF A WIRELESS AMBIENT DEVICE**

(30) Priority: 16.02.2024 GB 202402193
(71) Applicant: Nokia Technologies Oy, 02610 Espoo (FI)
(72) Inventor: KIILERICH PRATAS, Nuno Manuel, Aalborg (DK); VEJLGAARD, Benny, Gistrup (DK); SVENDSEN, Simon, Aalborg (DK); BARBU, Oana-Elena, Aalborg (DK); HARREBEK, Johannes, Aalborg (DK)
(74) Representative: Nokia EPO representatives

(57) **Abstract**

According to an example aspect of the present disclosure, there is provided a method, comprising estimating a timing of one or more first Physical Broadcast Channel, PBCH, transmissions of a base station and transmitting in accordance with the timing of said one or more first PBCH transmissions, to a user equipment or the base station, one or more transmissions overlaying one or more second PBCH transmissions of the base station.

## Description

### FIELD

Various example embodiments relate to transmissions of a wireless ambient device.

### BACKGROUND

Wireless ambient devices, such as ambient Internet of Things, IoT, devices may be exploited in various applications in different wireless communication networks. For example, in case of cellular communication networks, such as in networks operating according to 3rd Generation Partnership Project, 3GPP, standards, there is a need to provide enhanced methods, apparatuses and computer programs for wireless ambient devices. Such enhancements may also be beneficial in other wireless communication networks.

### SUMMARY

According to some aspects, there is provided the subject-matter of the independent claims. Some example embodiments are defined in the dependent claims.

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

According to an aspect of the present disclosure, there is provided an apparatus comprising at least one processing core, at least one processor; and at least one memory storing instructions that, when executed by the at least one processor, cause the apparatus at least to obtain, in a cellular communication network, a configuration configuring the apparatus to receive one or more transmissions from a wireless ambient device, wherein said one or more transmissions are to overlay one or more periodic broadcast channel transmissions of a wireless network node and detect said one or more transmissions of the wireless ambient device in accordance with the configuration. The apparatus may be a User Equipment or a control device configured to control the UE when installed therein. Example embodiments of the aspect may comprise at least one feature from the following bulleted list or any combination of the following features:
- wherein the configuration comprises at least one of: a timing of said one or more periodic broadcast channel transmissions or a periodicity of said one or more periodic broadcast channel transmissions;
- wherein the configuration configures the apparatus to receive said one or more transmissions from the wireless ambient device modulated onto the periodic broadcast channel transmissions of the wireless network node;
- wherein the configuration configures the apparatus to receive said one or more transmissions from the wireless ambient device in a same pattern as said one or more periodic broadcast channel transmissions of the wireless network node;
- wherein the at least one processing core and at least one memory storing instructions further cause the apparatus at least to detect a received signal comprising said one or more transmissions of the wireless ambient device and said one or more periodic broadcast channel transmissions of the wireless network node and detect, after removing said one or more periodic broadcast channel transmissions from the received signal, said one or more transmissions of the wireless ambient device from the received signal;
- wherein the at least one processing core and at least one memory storing instructions further cause the apparatus at least to determine, based on an identification of a received broadcast channel transmission, that said one or more transmissions of the wireless ambient device are modulated onto the received broadcast channel transmission;
- wherein said one or more transmissions of the wireless ambient device comprise backscatter reports with an identity of the wireless ambient device;
- wherein the at least one processing core and at least one memory storing instructions further cause the apparatus at least to attempt to demodulate for all registered identities to identify the wireless ambient device.

According to an aspect of the present disclosure, there is provided an apparatus comprising at least one processing core, at least one processor; and at least one memory storing instructions that, when executed by the at least one processor, cause the apparatus at least to determine that the wireless ambient device is configured to transmit one or more transmissions overlaying one or more periodic broadcast channel transmissions of a wireless network node and transmit, to a user equipment or a wireless network node, said one or more transmissions in accordance with the configuration. The apparatus may be a wireless ambient device, such as an ambient Internet of Things, IoT, device or a control device configured to control the wireless ambient device when installed therein. Example embodiments of the aspect may comprise at least one feature from the following bulleted list or any combination of the following features:
- wherein the configuration comprises at least one of: a timing of said one or more periodic broadcast channel transmissions or a periodicity of said one or more periodic broadcast channel transmissions;
- wherein the at least one processing core and at least one memory storing instructions further cause the apparatus at least to transmit said one or more transmissions modulated onto the periodic broadcast channel transmissions of the wireless network node;
- wherein the at least one processing core and at least one memory storing instructions further cause the apparatus at least to transmit said one or more transmissions in a same pattern as said one or more periodic broadcast channel transmissions of the wireless network node;
- wherein said one or more transmissions comprise backscatter reports with an identity of the wireless ambient device;
- wherein the at least one processing core and at least one memory storing instructions further cause the apparatus at least to determine a timing of said one or more transmissions according to a timing of reception of said one or more periodic broadcast channel transmissions;
- wherein the at least one processing core and at least one memory storing instructions further cause the apparatus at least to determine, after determining a timing of reception of one or more first periodic broadcast channel transmissions, that said one or more transmissions are to be transmitted during one or more second periodic broadcast channel transmission.

According to an aspect of the present disclosure, there is provided a user equipment comprising at least one processing core, at least one processor; and at least one memory storing instructions that, when executed by the at least one processor, cause the apparatus at least to obtain, in a cellular communication network, a configuration configuring the user equipment to receive one or more transmissions from an ambient Internet of Things, IoT, device, wherein said one or more transmissions are to overlay one or more Physical Broadcast Channel, PBCH, transmissions of a base station and detect, from the ambient IoT device, said one or more transmissions of the ambient IoT device in accordance with the configuration. The apparatus may be a User Equipment, UE, or a control device configured to control the UE when installed therein. Example embodiments of the aspect may comprise at least one feature from the following bulleted list or any combination of the following features:
- wherein the configuration comprises at least one of: a timing of said one or more PBCH transmissions or a periodicity of PBCH transmissions;
- wherein the configuration configures the user equipment to receive said one or more transmissions from the ambient IoT device modulated onto the PBCH transmissions;
- wherein the configuration configures the user equipment to receive said one or more transmissions from the ambient IoT device in a same pattern as said one or more PBCH transmissions;
- wherein the at least one processing core and at least one memory storing instructions further cause the apparatus at least to detect a received signal comprising said one or more transmissions of the ambient IoT device and said one or more PBCH transmissions and detect, after removing said one or more PBCH transmissions from the received signal, said one or more transmissions of the ambient IoT device from the received signal;
- wherein the at least one processing core and at least one memory storing instructions further cause the apparatus at least to determine, based on an identification of a received PBCH transmission, that said one or more transmissions of the ambient IoT device are modulated onto the received PBCH transmission;
- wherein said one or more transmissions of the ambient IoT device comprise backscatter reports with an identity of the ambient IoT device;
- wherein the at least one processing core and at least one memory storing instructions further cause the apparatus at least to attempt to demodulate for all registered identities to identify the ambient IoT device.

According to an aspect of the present disclosure, there is provided an apparatus comprising at least one processing core, at least one processor; and at least one memory storing instructions that, when executed by the at least one processor, cause the apparatus at least to determine that an ambient Internet of Things, IoT, device is configured to transmit one or more transmissions overlaying one or more Physical Broadcast Channel, PBCH, transmissions of a base station and transmit, to a user equipment or the base station, said one or more transmissions in accordance with the configuration. The apparatus may be the ambient IoT device or a control device configured to control the ambient IoT device when installed therein. Example embodiments of the aspect may comprise at least one feature from the following bulleted list or any combination of the following features:
- wherein the configuration comprises at least one of: a timing of said one or more PBCH transmissions or a periodicity of PBCH transmissions;
- wherein the at least one processing core and at least one memory storing instructions further cause the apparatus at least to transmit said one or more transmissions modulated onto said one or more PBCH transmissions;
- wherein the at least one processing core and at least one memory storing instructions further cause the apparatus at least to transmit said one or more transmissions in a same pattern as said one or more PBCH transmissions of the wireless network node;
- wherein said one or more transmissions comprise backscatter reports with an identity of the ambient IoT device;
- wherein the at least one processing core and at least one memory storing instructions further cause the apparatus at least to determine a timing of said one or more transmissions according to a timing of reception of said one or more PBCH transmissions;
- wherein the at least one processing core and at least one memory storing instructions further cause the apparatus at least to determine, after determining a timing of reception of one or more first PBCH transmissions, that said one or more transmissions are to be transmitted during one or more second PBCH transmissions.

According to an aspect of the present disclosure, there is provided an apparatus comprising at least one processing core, at least one processor; and at least one memory storing instructions that, when executed by the at least one processor, cause the apparatus at least to estimate a timing of one or more first Physical Broadcast Channel, PBCH, transmissions of a base station and transmit in accordance with the timing of said one or more first PBCH transmissions, to a user equipment or the base station, one or more transmissions overlaying one or more second PBCH transmissions of the base station. The apparatus may be a wireless ambient device, such as an ambient Internet of Things, IoT, device or a control device configured to control the wireless ambient device when installed therein. Example embodiments of the aspect may comprise at least one feature from the following bulleted list or any combination of the following features:
- wherein the at least one processing core and at least one memory storing instructions further cause the apparatus at least to determine a power profile of said one or more first PBCH transmissions of the base station and estimate, based on the power profile, the timing of said one or more first PBCH transmissions;
- wherein the at least one processing core and at least one memory storing instructions further cause the apparatus at least to determine the power profile by averaging a power of said one or more first PBCH transmissions;
- wherein the at least one processing core and at least one memory storing instructions further cause the apparatus at least to estimate, based on the power profile, a periodicity of said one or more first PBCH transmissions;
- wherein the at least one processing core and at least one memory storing instructions further cause the apparatus at least to set a timer for said one or more transmissions based on the periodicity of the PBCH transmissions slots of said one or more first PBCH transmissions;
- wherein the at least one processing core and at least one memory storing instructions further cause the apparatus at least to determine the power profile based on a detected periodic power;
- wherein the at least one processing core and at least one memory storing instructions further cause the apparatus at least to detect at least one synchronization signal block of said one or more first PBCH transmissions and estimate the timing based on the at least one detected synchronization signal block;
- wherein the at least one processing core and at least one memory storing instructions further cause the apparatus at least to estimate the timing based on at least one primary synchronization signal symbol of the at least one detected synchronization signal block;
- wherein the at least one processing core and at least one memory storing instructions further cause the apparatus at least to detect that a received power of the at least one primary synchronization signal symbol of the at least one detected synchronization signal block is smaller than a received power of other symbols in the at least one detected synchronization signal block;
- wherein the at least one processing core and at least one memory storing instructions further cause the apparatus at least to transmit said one or more transmissions modulated onto said one or more second PBCH transmissions;
- wherein the at least one processing core and at least one memory storing instructions further cause the apparatus at least to transmit said one or more transmissions in a same pattern as said one or more first and second PBCH transmissions of the wireless network node;
- wherein said one or more transmissions comprise backscatter reports with an identity of the ambient IoT device;
- wherein the at least one processing core and at least one memory storing instructions further cause the apparatus at least to determine a timing of said one or more transmissions according to a timing of reception of said one or more first PBCH transmissions;
- wherein the at least one processing core and at least one memory storing instructions further cause the apparatus at least to determine, after determining a timing of reception of said one or more first PBCH transmissions, that said one or more transmissions are to be transmitted during said one or more second PBCH transmissions.

According to an aspect of the present disclosure, there is provided a method, comprising obtaining, in a cellular communication network, a configuration configuring an apparatus to receive one or more transmissions from a wireless ambient device, wherein said one or more transmissions are to overlay one or more periodic broadcast channel transmissions of a wireless network node and detecting said one or more transmissions of the wireless ambient device in accordance with the configuration. The method may be performed by an apparatus, such as User Equipment, UE, or a control device configured to control the UE when installed therein.

According to an aspect of the present disclosure, there is provided a method, comprising determining that a wireless ambient device is configured to transmit one or more transmissions overlaying one or more periodic broadcast channel transmissions of a wireless network node and transmitting, to a user equipment or a wireless network node, said one or more transmissions in accordance with the configuration. The method may be performed by be a wireless ambient device, such as an ambient Internet of Things, IoT, device or a control device configured to control the UE when installed therein.

According to an aspect of the present disclosure, there is provided a method, comprising obtaining, in a cellular communication network, a configuration configuring the user equipment to receive one or more transmissions from an ambient Internet of Things, IoT, device, wherein said one or more transmissions are to overlay one or more Physical Broadcast Channel, PBCH, transmissions of a base station and detecting, from the ambient IoT device, said one or more transmissions of the ambient IoT device in accordance with the configuration. The method may be performed by an apparatus, such as User Equipment, UE, or a control device configured to control the UE when installed therein.

According to an aspect of the present disclosure, there is provided a method, comprising determining that an ambient Internet of Things, IoT, device is configured to transmit one or more transmissions overlaying one or more Physical Broadcast Channel, PBCH, transmissions of a base station and transmitting, to a user equipment or the base station, said one or more transmissions in accordance with the configuration. The method may be performed by the ambient IoT device or a control device configured to control the ambient IoT device when installed therein.

According to an aspect of the present disclosure, there is provided a method, comprising estimating a timing of one or more first Physical Broadcast Channel, PBCH, transmissions of a base station and transmitting in accordance with the timing of said one or more first PBCH transmissions, to a user equipment or the base station, one or more transmissions overlaying one or more second PBCH transmissions of the base station. The method may be performed by be a wireless ambient device, such as an ambient Internet of Things, IoT, device or a control device configured to control the UE when installed therein.

According to an aspect of the present disclosure, there is provided an apparatus, comprising means for obtaining, in a cellular communication network, a configuration configuring an apparatus to receive one or more transmissions from a wireless ambient device, wherein said one or more transmissions are to overlay one or more periodic broadcast channel transmissions of a wireless network node and means for detecting said one or more transmissions of the wireless ambient device in accordance with the configuration. The apparatus may be a User Equipment, UE, or a control device configured to control the UE when installed therein.

According to an aspect of the present disclosure, there is provided an apparatus, comprising means for determining that a wireless ambient device is configured to transmit one or more transmissions overlaying one or more periodic broadcast channel transmissions of a wireless network node and means for transmitting, to a user equipment or a wireless network node, said one or more transmissions in accordance with the configuration. The apparatus may be the wireless ambient device, such as an ambient Internet of Things, IoT, device or a control device configured to control the wireless ambient device when installed therein.

According to an aspect of the present disclosure, there is provided an apparatus, comprising means for obtaining, in a cellular communication network, a configuration configuring the user equipment to receive one or more transmissions from an ambient Internet of Things, IoT, device, wherein said one or more transmissions are to overlay one or more Physical Broadcast Channel, PBCH, transmissions of a base station and means for detecting, from the ambient IoT device, said one or more transmissions of the ambient IoT device in accordance with the configuration. The apparatus may be the ambient IoT device or a control device configured to control the ambient IoT device when installed therein.

According to an aspect of the present disclosure, there is provided an apparatus, comprising means for determining that an ambient Internet of Things, IoT, device is configured to transmit one or more transmissions overlaying one or more Physical Broadcast Channel, PBCH, transmissions of a base station and means for transmitting, to a user equipment or the base station, said one or more transmissions in accordance with the configuration. The apparatus may be the ambient IoT device or a control device configured to control the ambient IoT device when installed therein.

According to an aspect of the present disclosure, there is provided an apparatus, comprising means for estimating a timing of one or more first Physical Broadcast Channel, PBCH, transmissions of a base station and means for transmitting in accordance with the timing of said one or more first PBCH transmissions, to a user equipment or the base station, one or more transmissions overlaying one or more second PBCH transmissions of the base station. The apparatus may be a wireless ambient device, such as an ambient Internet of Things, IoT, device or a control device configured to control the wireless ambient device when installed therein.

According to an aspect of the present disclosure, there is provided a non-transitory computer readable medium having stored thereon a set of computer readable instructions that, when executed by at least one processor, cause an apparatus to at least perform obtaining, in a cellular communication network, a configuration configuring an apparatus to receive one or more transmissions from a wireless ambient device, wherein said one or more transmissions are to overlay one or more periodic broadcast channel transmissions of a wireless network node and detecting said one or more transmissions of the wireless ambient device in accordance with the configuration. The apparatus may be a User Equipment, UE, or a control device configured to control the UE when installed therein.

According to an aspect of the present disclosure, there is provided a non-transitory computer readable medium having stored thereon a set of computer readable instructions that, when executed by at least one processor, cause an apparatus to at least perform determining that a wireless ambient device is configured to transmit one or more transmissions overlaying one or more periodic broadcast channel transmissions of a wireless network node and transmitting, to a user equipment or a wireless network node, said one or more transmissions in accordance with the configuration. The apparatus may be the wireless ambient device, such as an ambient Internet of Things, IoT, device or a control device configured to control the wireless ambient device when installed therein.

According to an aspect of the present disclosure, there is provided a non-transitory computer readable medium having stored thereon a set of computer readable instructions that, when executed by at least one processor, cause an apparatus to at least obtain, in a cellular communication network, a configuration configuring the user equipment to receive one or more transmissions from an ambient Internet of Things, IoT, device, wherein said one or more transmissions are to overlay one or more Physical Broadcast Channel, PBCH, transmissions of a base station and detect, from the ambient IoT device, said one or more transmissions of the ambient IoT device in accordance with the configuration. The apparatus may be a User Equipment, UE, or a control device configured to control the UE when installed therein.

According to an aspect of the present disclosure, there is provided a non-transitory computer readable medium having stored thereon a set of computer readable instructions that, when executed by at least one processor, cause an apparatus to at least determine that an ambient Internet of Things, IoT, device is configured to transmit one or more transmissions overlaying one or more Physical Broadcast Channel, PBCH, transmissions of a base station and transmit, to a user equipment or the base station, said one or more transmissions in accordance with the configuration. The apparatus may be the ambient IoT device or a control device configured to control the ambient IoT device when installed therein.

According to an aspect of the present disclosure, there is provided a non-transitory computer readable medium having stored thereon a set of computer readable instructions that, when executed by at least one processor, cause an apparatus to at least estimate a timing of one or more first Physical Broadcast Channel, PBCH, transmissions of a base station and transmit in accordance with the timing of said one or more first PBCH transmissions, to a user equipment or the base station, one or more transmissions overlaying one or more second PBCH transmissions of the base station. The apparatus may be a wireless ambient device, such as an ambient Internet of Things, IoT, device or a control device configured to control the wireless ambient device when installed therein.

According to an aspect of the present disclosure, there is provided a computer program comprising instructions which, when the program is executed by an apparatus, cause the apparatus at least to obtain, in a cellular communication network, a configuration configuring an apparatus to receive one or more transmissions from a wireless ambient device, wherein said one or more transmissions are to overlay one or more periodic broadcast channel transmissions of a wireless network node and detect said one or more transmissions of the wireless ambient device in accordance with the configuration. The apparatus may be a User Equipment, UE, or a control device configured to control the UE when installed therein.

According to an aspect of the present disclosure, there is provided a computer program comprising instructions which, when the program is executed by an apparatus, cause the apparatus at least to determine that a wireless ambient device is configured to transmit one or more transmissions overlaying one or more periodic broadcast channel transmissions of a wireless network node and transmit, to a user equipment or a wireless network node, said one or more transmissions in accordance with the configuration. The apparatus may be the wireless ambient device, such as an ambient Internet of Things, IoT, device or a control device configured to control the wireless ambient device when installed therein.

According to an aspect of the present disclosure, there is provided a computer program comprising instructions which, when the program is executed by an apparatus, cause the apparatus at least to obtain, in a cellular communication network, a configuration configuring the user equipment to receive one or more transmissions from an ambient Internet of Things, IoT, device, wherein said one or more transmissions are to overlay one or more Physical Broadcast Channel, PBCH, transmissions of a base station and detect, from the ambient IoT device, said one or more transmissions of the ambient IoT device in accordance with the configuration. The apparatus may be a User Equipment, UE, or a control device configured to control the UE when installed therein.

According to an aspect of the present disclosure, there is provided a computer program comprising instructions which, when the program is executed by an apparatus, cause the apparatus at least to determine that an ambient Internet of Things, IoT, device is configured to transmit one or more transmissions overlaying one or more Physical Broadcast Channel, PBCH, transmissions of a base station and transmit, to a user equipment or the base station, said one or more transmissions in accordance with the configuration. The apparatus may be the ambient IoT device or a control device configured to control the ambient IoT device when installed therein.

According to an aspect of the present disclosure, there is provided a computer program comprising instructions which, when the program is executed by an apparatus, cause the apparatus at least to estimate a timing of one or more first Physical Broadcast Channel, PBCH, transmissions of a base station and transmit in accordance with the timing of said one or more first PBCH transmissions, to a user equipment or the base station, one or more transmissions overlaying one or more second PBCH transmissions of the base station. The apparatus may be a wireless ambient device, such as an ambient Internet of Things, IoT, device or a control device configured to control the wireless ambient device when installed therein.

### BRIEF DESCRIPTION OF THE DRAWINGS

FIG. 1 illustrates an example of a network scenario in accordance with at least some example embodiments;
FIG. 2a illustrates a first topology in accordance with at least some example embodiments;
FIG. 2b illustrates a second topology in accordance with at least some example embodiments;
FIG. 2c illustrates a third topology in accordance with at least some example embodiments;
FIG. 2d illustrates a fourth topology in accordance with at least some example embodiments;
FIG. 3 illustrates an example of backscattering in accordance with at least some example embodiments;
FIG. 4 illustrates a signalling graph in accordance with at least some example embodiments;
FIG. 5 illustrates an example apparatus capable of supporting at least some example embodiments;
FIG. 6 illustrates a flow graph of a first method in accordance with at least some example embodiments;
FIG. 7 illustrates a flow graph of a second method in accordance with at least some example embodiments;
FIG. 8 illustrates a flow graph of a third method in accordance with at least some example embodiments.

### EXAMPLE EMBODIMENTS

Embodiments of the present disclosure provide enhancements for wireless ambient devices. More specifically, embodiments of the present disclosure provide enhancements for transmissions of wireless ambient devices. A wireless ambient device may harvest energy and transmit one or more transmissions such that said one or more transmissions overlay one or more periodic broadcast channel transmissions. Thus, mobile-originated communications of wireless ambient devices are enabled without activation signals, because a reader may be configured to detect said one or more transmissions in accordance with said one or more periodic broadcast channel transmissions.

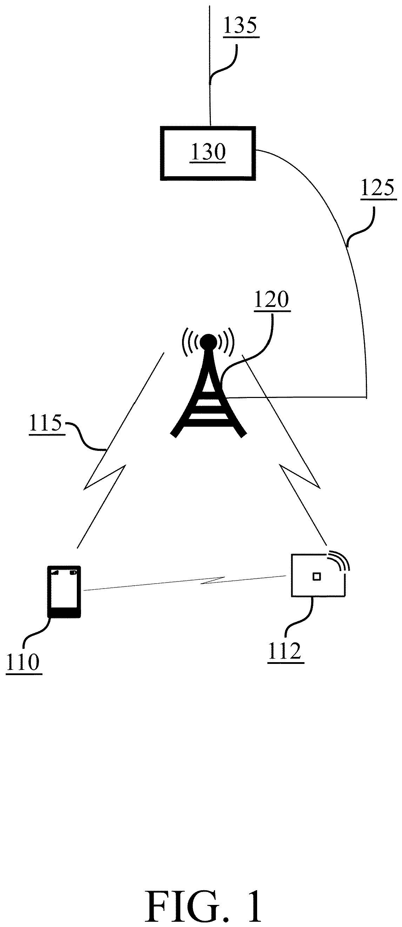

FIG. 1 illustrates an example of a network scenario in accordance with at least some example embodiments. According to the example scenario of FIG. 1, there may be a communication system, which comprises UE 110, wireless ambient device 112, wireless network node 120 and core network element 130. UE 110 and wireless ambient device UE 112 may be connected to wireless network node 120, and also to each other, via air interface 115. The connection(s) between UE 110, wireless ambient device 112 and wireless network node 120 may be bidirectional or in some cases at least some of the connection(s) may be unidirectional. For instance, in some examples, wireless ambient device 112 may be configured for receiving information from wireless network node 120, but not transmit information to wireless network node 120, in which case UE 110 may forward transmissions of wireless ambient device 112 to wireless network node 120. UE 110 and wireless ambient device 112 may be connected to wireless network node 120, and possibly each other, for example by using multiple beams, either simultaneously or one at a time. That is, air interface 115 may be a beam-based air interface.

UE 110 may comprise, for example, a smartphone, a cellular phone, a Machine-to-Machine, M2M, node, Machine-Type Communications, MTC, node, Reduced Capability, RedCap, UE, an Internet of Things, IoT, node (e.g., IoT device), a car telemetry unit, a laptop computer, a tablet computer or, indeed, any kind of suitable wireless terminal. Wireless network node 120 may be considered as a serving node for UE 110 and wireless ambient device 112, and one cell of wireless network node 120 may be a serving cell for UE 110 and wireless ambient device 112.

Air interface 115 between UE 110, wireless ambient device 112 and wireless network node 120, may be configured in accordance with a Radio Access Technology, RAT, which UE 110, wireless ambient device 112 and wireless network node 120 are configured to support. Examples of cellular RATs include Long Term Evolution, LTE, New Radio, NR, which may also be known as fifth generation, 5G, radio access technology and MulteFire.

For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In any case, example embodiments of the present disclosure are not restricted to any particular wireless technology. Instead, example embodiments may be exploited in any wireless communication system, wherein it would be beneficial to enhance transmissions of wireless ambient device 112.

Wireless ambient devices may be exploited in various applications. For example, regarding IoT applications in 3GPP cellular communication networks, Narrowband IoT, NB-IoT, enhanced Machine-Type Communications, eMTC, and RedCap may be exploited to satisfy the requirements on low-cost and low-power devices for wide area IoT communication. Such IoT devices may consume tens, or hundreds, of milliwatts power during transceiving, while the cost may be a few dollars. However, to achieve the internet of everything, it would be desirable to have IoT devices with ten or even a hundred times lower cost and power consumption, especially for a large number of applications requiring battery-less devices.

The number of IoT connections has been growing rapidly in recent years and is predicted to be hundreds of billions by 2030. With more and more 'things' expected to be interconnected for improving production efficiency and increasing comforts of life, it would be desirable to enable further reduction of size, cost, and power consumption for IoT devices. In particular, regular replacement of battery for all the IoT devices would be impractical due to the tremendous consumption of materials and manpower. Therefore, it would be good to use energy harvested from environments to power IoT devices for self-sustainable communications, especially in applications with a huge number of devices (e.g., Identity, ID, tags and sensors).

At least one challenge with the target use cases is the capability of cooperating with a limited size of a device that is configured to perform energy harvesting. Devices of cellular communication networks may consume tens or even hundreds of milliwatts power for transceiver processing. Taking an NB-IoT module for example, current consumption for receive processing may be about 60mA with a supply voltage higher than 3.1V, and 70mA for transmitting processing at 0dBm transmit power.

Energy harvesting may be performed by a device comprising a rechargeable battery or a supercapacitor. However, even in such a case both, the rechargeable battery and the supercapacitor, may suffer from shortened lifetime in practical cases. First, it may be difficult to provide constant charging current or voltage by energy harvesting, while long-time continuous charging would be needed due to the very small output power from the energy harvester. Inconstant charging current and long-time continuous charging would be harmful to battery life. The lifetime of the supercapacitor may be significantly reduced at least in high temperature environments (e.g., less than 3 years at 50 degrees centigrade).

Secondly, the size of the device would need to be significantly increased, if the device would comprise the rechargeable battery or the supercapacitor. A small sized button battery may provide current of a few tens of milliamps, but not more. On the other hand, a battery with a larger size (e.g., AA battery) may be used to power devices of cellular communication network, but in such a case the battery would be even larger than an NB-IoT module of the device. To store energy for a proper duration of working (e.g., one second), the required capacitance of a supercapacitor may be at the level of a hundred mill-farads, but the size of such supercapacitors may be larger than an NB-IoT module. Thirdly, both rechargeable batteries and supercapacitors may be more expensive than the NB-IoT module itself. Even purchased in large quantities, the cost of a suitable battery or a supercapacitor may reach one or a few dollars, which would nearly doubles the cost of the NB-IoT device.

Radio Frequency Identification, RFID, technology may be used to support battery less tags (i.e., devices). The power consumption of passive RFID tags may be as low as 1 microwatt. Such low power consumption may be achieved by using envelope detection for downlink data reception and backscatter communication for uplink data transmission. However, RFID may enable only short-range communications, e.g., with effective range of less than 10 meters, but not more. Also at least some other non-3GPP technologies may possibly be used to provide low power consumption of backscatter communication.

A wireless ambient device may be a passive radio device. A passive radio device may be a device that harnesses energy from wireless signals transmitted on specific carriers and/or bandwidths. The passive radio device may comprise and change a circuitry that, once activated, may emit and/or reflect a signal which encodes at least the ID of the passive radio device. A system may comprise a passive radio device, an activator and a reader. The passive radio may harness energy over a range of frequencies and listen for activation signals. Once such a signal is detected by the passive radio, the passive radio may emit and/or reflect a signal which is specific to the ID of the passive radio. An activator may be a device that sends an activation signal targeted at waking up the passive radio. A reader may be a device that listens and detects the signals transmitted by the passive radio device. The reader may, or may not, be collocated with the activator.

The passive radio device may be a pure battery-less device with no energy storage capability at all, and be completely dependent on the availability of an external source of energy. Alternatively, the passive radio device may be semi-passive device with a limited energy storage capability that does not need to be replaced or recharged manually.

A wireless ambient device may be an Ambient IoT device. As an example, three device types for passive radios have identified, related to Ambient IoT, in 3GPP TR 38.848 V0.3.0:
- Device A: No energy storage, no independent signal generation/amplification, i.e., backscattering transmission;
- Device B: Has energy storage, no independent signal generation, i.e., backscattering transmission. Use of stored energy may comprise amplification for reflected signals; and
- Device C: Has energy storage, has independent signal generation, i.e., active Radio Frequency, RF, components for transmission.

Design targets for power consumptions may be the following:
- Device A ≤ [1 µW] or ≤ [10 µW];
- Device A < Device B < Device;
- Device C ≤ 1mW to ≤ 10 mW.

Device complexity design targets may be the following:
- Device A: Comparable to Ultra High Frequency RFID;
- Device A ≤ Device B ≤ Device C;
- Device C: Orders-of-magnitude lower than NB-IoT.

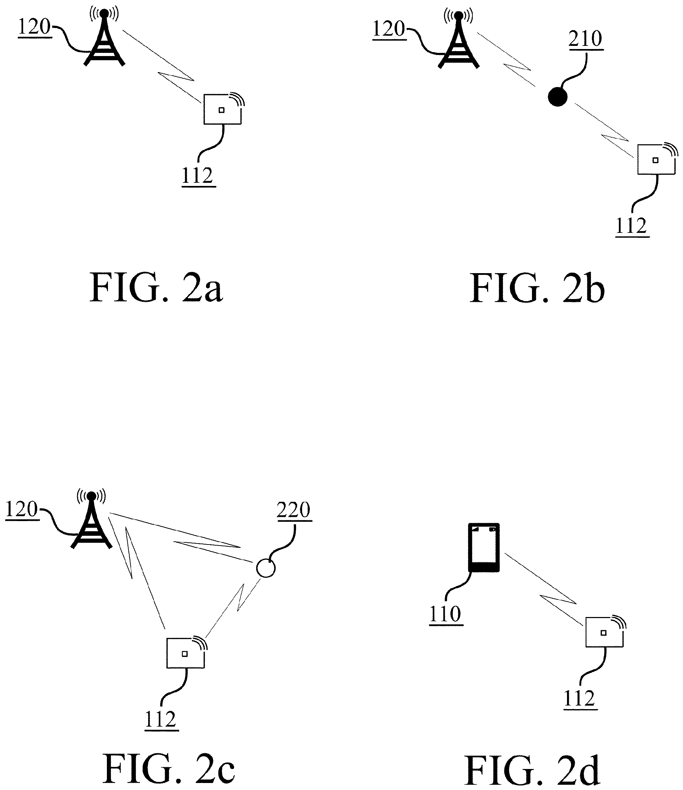

Using ambient IoT further as an example, the following connectivity topologies for ambient IoT networks and devices are illustrated in FIGs. 2a - 2d. In all these topologies, an ambient IoT device may be provided with a carrier wave from other node(s), either inside or outside the topology. The links in each topology may be bidirectional or unidirectional. Wireless network node 120, UE 110, assisting node, or intermediate node may comprise multiple BSs or UEs. A mixture of indoor and outdoor placement of such nodes may be regarded as a network implementation choice.

FIG. 2a illustrates a first topology in accordance with at least some example embodiments. In the first topology illustrated in FIG. 2a, wireless ambient device 112, such as an ambient IoT device, may directly and bidirectionally communicate with wireless network node 120, such as a base station. The communication between wireless network node 120 and wireless ambient device 112 may comprise, e.g., ambient IoT data and/or signalling. The first topology comprises the possibility that a wireless network node transmitting to wireless ambient device 112 is different than a wireless network node receiving from wireless ambient device 112.

FIG. 2b illustrates a second topology in accordance with at least some example embodiments. In the second topology illustrated in FIG. 2b, wireless ambient device 112 may communicate bidirectionally with intermediate node 210, wherein intermediate node 210 is between intermediate node 210 and wireless network node 120. Intermediate node 210 may be a relay, Integrated Access and Backhaul, IAB, node, UE, repeater, etc. Intermediate node 210 may be capable of ambient IoT. Intermediate node 210 may transfer information between wireless network node 120 and wireless ambient device 112. Intermediate node 210 may deal with all the interactions with wireless ambient device 112.

FIG. 2c illustrates a third topology in accordance with at least some example embodiments. In the third topology illustrated in FIG. 2c, wireless ambient device 112 may transmit data and/or signaling to wireless network node 120 and receive data and/or signaling from assisting node 220. Alternatively, wireless ambient device 112 may receive data and/or signaling from wireless network node 120 and transmit data and/or signaling to assisting node 220. Assisting node 220 may be a relay, IAB node, UE, repeater, etc. Assisting node 220 may be capable of ambient IoT. Assisting node 220 may transfer information between wireless network node 120 and wireless ambient device 112. Assisting node 220 may assist either by serving as an activator or as a reader.

FIG. 2d illustrates a fourth topology in accordance with at least some example embodiments. In the fourth topology illustrated in FIG. 2d, wireless ambient device 112 may communicate bidirectionally with UE 110. The communication between UE 110 and wireless ambient device 112 may comprise, e.g., ambient IoT data and/or signaling.

In some example embodiments of the present disclosure, Device-Originated Autonomous, DO-A, may be considered for wireless ambient devices. At least one challenge associated with the DO-A case is that if wireless ambient device 112 does not have its own energy source, or the energy source is very limited, wireless ambient device 112 may be able to provide its reply when triggered by an activation signal, but not otherwise. However, such an operation would correspond to a device-originated - device-terminated triggered traffic use case, e.g., as described in 3GPP TR 38.848. However, it remains unclear how to enable the DO-A case. Embodiments of the present disclosure therefore enable DO-A traffic type. More specifically, embodiments of the present disclosure provide a procedure to enable mobile originated communication from wireless ambient device 112, such as a passive Ambient IoT device A or B, and particular for device B.

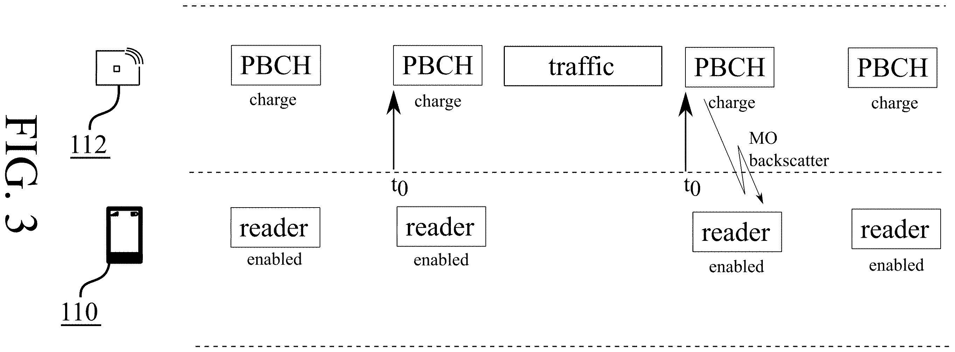

FIG. 3 illustrates an example of backscattering in accordance with at least some example embodiments. As illustrated in FIG. 3, wireless ambient device 112 may charge and obtain a coarse synchronization to wireless network node 120 based on one or more periodic broadcast channel transmissions, such as one or more Physical Broadcast Channel, PBCH, transmissions, of wireless network node 120. In the example of FIG. 3, UE 110 acts as a reader. However, in some embodiments, for example wireless network node 120 may act as a reader similarly.

In some example embodiments, wireless ambient device 112, such as an ambient IoT device, may be configured and tuned to charge RF energy on frequencies wherein Synchronization Signal Block, SSB, and PBCH are transmitted by wireless network node 120, based on the available frequency band. Wireless ambient device 112 may subsequently transmit a backscatter transmission on the repeated PBCH signals, i.e., perform a MO backscatter transmission.

In some example embodiments, wireless ambient device 112 may be configured to backscatter in a pattern which follows a pattern of said one or more periodic broadcast channel transmissions, the SSB/PBCH transmission pattern. For this to happen, wireless ambient device 112 may compute a timing of the reception of a first periodic broadcast channel transmission and time-advance its future transmissions with reference to a next, second periodic broadcast channel instance, to ensure that the future periodic broadcast channel transmission and the reply of wireless ambient device 112 are overlayed, as seen by the reader, such as UE 110. The pattern may comprise time and frequency resources.

Such a procedure may be particularly beneficial, e.g., for a device type B if there is loss of RF signal in between the periodic broadcast channel instances. If RF power is lost, a device type A may lose its timer state as such a device would have no energy storage. Thus, device type A would need to be able to hold the charge on a cap, e.g., for 80ms or wireless network node 120 would need to guarantee other downlink traffic on the radio resources, such as Physical Resource Blocks, PRBs, in between the SSBs.

In some example embodiments, a backscatter transmission of wireless ambient device 112, such as a reply of an ambient IoT device, may be synchronized to the future periodic broadcast channel transmissions. Such synchronization may be used to ensure that the backscatter transmission is overlayed with the next periodic broadcast channel instance and thus, the reader may sequentially detect the backscatter transmission after removing the contribution of the periodic broadcast transmission from the total received signal.

In some example embodiments, there may be an association of resources for backscatter transmission and periodic broadcast channel transmission occasion. Such an association may be pre-configured in wireless ambient device 112 or provided as a part of the PBCH payload or reference signals associated with PBCH and/or the SSB (e.g., specific Primary Synchronization Signal, PSS, and/or Secondary Synchronization Signal, SSS, sequences).

In some example embodiments, the periodic broadcast channel may be a PBCH. A PBCH may be used to broadcast Master Information Block, MIB, from wireless network node 120 to all UEs within the coverage area of wireless network node 120. PBCH may be transmitted with fixed Quadrature Phase-Shift Keying, QPSK, modulation with 80 ms periodicity, with multiple repetitive transmissions within this period. MIB may be used by UE 110 to start decoding Physical Downlink Control Channel, PDCCH, which in turn helps UE 110 to decode Physical Downlink Shared Channel, PDSCH. As soon as UE 110 is turned on, it may look for MIB. PBCH may be accompanied by PSS and SSS for time-frequency synchronization between UE 110 and wireless network node 120. PBCH and said synchronization signals may form an SSB block. UE 110 may decode the received SSB and after that read the information in the System Information Block 1, SIB1, block. SIB1 may comprise information for initial bandwidth part for initial access. SSB may be, e.g., 4 Orthogonal Frequency-Division Multiplexing, OFDM, symbols in time and 20 resource blocks in the frequency domain.

Based on the periodicity of the periodic broadcast channel signals, wireless ambient device 112 may use these channels and any RF signals at those frequencies in between SSBs for charging energy. The charged energy may be stored for, e.g., device type B for future use while device type A may use it for a communication session provided the proximity of wireless network node 120 and the tag, i.e., wireless ambient device 112, but not otherwise. Device type A may lose its timer state information in between SSB blocks and hence, be unable to reply at the right point in time.

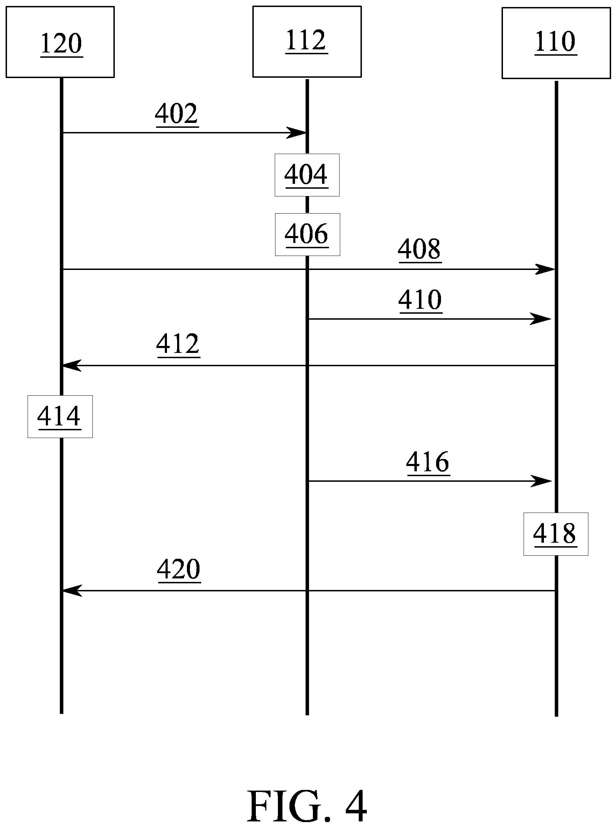

FIG. 4 illustrates a signalling graph in accordance with at least some example embodiments. On the vertical axes are disposed, from the left to the right, wireless network node 120, wireless ambient device 112 and UE 110 of FIG. 1. Time advances from the top towards the bottom. UE 110 may be configured to perform actions of a reader. Alternatively, or in addition, wireless network node 120 may be configured to perform actions of the reader. Wireless ambient device 112 may be configured to communicate on periodic broadcast channel transmissions, such as PBCH signals of wireless network node 120, and harvest its energy at the signal frequencies of the periodic broadcast channel signals.

At step 402, wireless ambient device 112 may receive one or more periodic broadcast channel transmission from wireless network node 120. Said one or more periodic broadcast channel transmission may be referred to as initial, first periodic broadcast channel transmissions. At step 404, wireless ambient device 112 may harvest energy from said one or more periodic broadcast channel transmissions. At step 406, wireless ambient device 112 may determine a timing of said one or more periodic broadcast channel transmissions. For example, wireless ambient device 112 may determine, or estimate, a timing of said one or more transmissions according to a timing of reception of said one or more periodic broadcast channel transmissions. Wireless ambient device 112 may determine, after determining a timing of reception of one or more first periodic broadcast channel transmissions, that said one or more transmissions are to be transmitted during one or more second periodic broadcast channel transmission.

In some example embodiments, wireless ambient device 112 may estimate the position of the periodic broadcast channel in time and set its internal timer synchronized to the periodicity of the periodic broadcast channel. For example, wireless ambient device 112 may use the PBCH for charging and backscattering and determine the right timing of the PBCH occurrences to start the backscatter modulation at the correct time at which the readers, such as UE 110, may be configure to listen to the mobile originated transmissions.

In some example embodiments, an identification of the periodic broadcast channel may be used by wireless ambient device 112 to ensure that the backscatter report is modulated onto the periodic broadcast channel, for which detection of UE 110 is enabled, and not onto any RF signal. UE 110 may be configured accordingly.

At step 408, wireless network node 120 may transmit a configuration to UE 110, to configure UE 110 receive one or more transmissions from wireless ambient device 112, wherein said one or more transmission of wireless ambient device 112 may be to overlay said one or more periodic broadcast channel transmissions of wireless network node 120. The configuration may comprise at least one of a timing of said one or more periodic broadcast channel transmissions or a periodicity of said one or more periodic broadcast channel transmissions. The configuration may configure UE 110 to receive said one or more transmissions from wireless ambient device 112 modulated onto the periodic broadcast channel transmissions of wireless network node 120. The configuration may configure UE 110 to receive said one or more transmissions from wireless ambient device 112 in a same pattern as said one or more periodic broadcast channel transmissions of wireless network node 120 and wireless ambient device 112 may transmit said one or more transmissions according to the pattern. Thus, a receiving entity, such as UE 110 or wireless network node 120, may be configured for receiving, e.g., ambient IoT device backscatter reports at the PBCH periodic timeslots.

In some example embodiments, an intermediate device may be the reader or wireless network node 120 itself (if full duplex capable) or another nearby wireless network node. In some example embodiments, UE 110 may be pre-configured, e.g., based on a standard, to receive said one or more transmissions of wireless ambient device 112 overlaying said one or more periodic broadcast channel transmissions of wireless network node 120. UE 110 may hence obtain the configuration based on the received configuration or the pre-configuration.

At step 410, wireless ambient device 112 may backscatter its ID to UE 110. At step 412, UE 110 may transmit the ID of wireless ambient device 112 to wireless network node 120. For example, an ambient IoT device may backscatter its ID and a registration signal to the 5G network. At step 414, wireless network node 120 may register the ID of wireless ambient device 112. Consequently, the 5G network knows that wireless ambient device 112 is within proximity and may be used for later mobile terminated sessions. Wireless ambient device 112, i.e., a tag, may include its ID in any backscatter report and hence, to increase quality of demodulation at UE 110.

At step 416, wireless ambient device 112 may transmit, to UE 110, said one or more transmissions overlaying said one or more periodic broadcast channel transmissions. For example, wireless ambient device 112 may initiate a mobile-originated transmission session at the next, second said one or more periodic broadcast channel transmissions, e.g., at 80 ms periodicity timeslot. The energy of said one or more periodic broadcast channel transmissions may be used by wireless ambient device 112 for charging and reflecting. For mobile-originated transmission, the periodic broadcast channel might not be tag-specific, i.e., specific to wireless ambient device 112. Hence, wireless ambient device 112 may include its ID in the backscatter report and UE 110 as a reader may attempt to demodulate for all registered IDs to identify the responding tag, i.e., wireless ambient device 112.

In some example embodiments, time and frequency resources may be in relation to the periodic broadcast channel. For example, the association of time and frequency resources may be pre-configured at wireless ambient device 112, or provided as a part of payload of the periodic broadcast channel or reference signals associated with, e.g., PBCH and/or the SSB (e.g. specific PSS and/or SSS sequences). The receiving entities, such as UE 110 and wireless network node 120, may receive the mobile-originated communications from wireless ambient device 112.

At step 418, UE 110 may detect said one or more transmissions of the wireless ambient device overlaying one or more periodic broadcast channel transmissions of a wireless network node, e.g., in accordance with the obtained configuration. For example, UE 110 may detect a received signal comprising said one or more transmissions of wireless ambient device 112 and said one or more periodic broadcast channel transmissions of wireless network node 120. Then, UE 110 may detect, after removing said one or more periodic broadcast channel transmissions from the received signal, said one or more transmissions of wireless ambient device 112 from the received signal.

At step 420, UE 110 may transmit data to wireless network node 120. For example, UE 110 may forward, to wireless network node 120, said one or more transmissions received from wireless ambient device 112. Wireless network node 120 may further forward said one or more transmissions of wireless ambient device 112 to a session lead, such as a Location and Management Function, LMF. Thus, wireless network node 120 node and the session lead may get a message transferred.

In some example embodiments, wireless network node 120 and/or the session lead may maintain a list of tags, e.g., IDs of wireless ambient devices, in a cell of wireless network node 120. Based on a time from a last activity, wireless network node 120 and/or the session lead may flush a certain tag ID from its database.

In some example embodiments, UE 110 (i.e., the tag reader) may need to get a copy of IDs wireless ambient devices in the cell of wireless network node 120 for better demodulation of the transmission. Thus, a communication from wireless network node 120 and/or the session lead to UE 110 may comprise an updated list of IDs of wireless ambient devices in the cell.

In some example embodiments, wireless ambient device 112 may, at step 406, estimate a timing of one or more first PBCH transmissions of wireless network node 120, e.g., based on a power profile of said one or more first PBCH transmissions. Wireless ambient device 112 may then transmit, in accordance with the timing of said one or more first PBCH transmissions, one or more transmissions overlaying one or more second PBCH transmissions of the base station.

Wireless ambient device 112 may determine a power profile of said one or more first PBCH transmissions. Wireless ambient device 112 may comprise a power detector diode for determining the power profile. Wireless ambient device 112 may, e.g., build the power profile of the PBCH power by performing long-term averaging of the received PBCH transmissions (harvesting power). That is, wireless ambient device 112 may determine the power profile by averaging a power of said one or more first PBCH transmissions.

In some example embodiments, wireless ambient device 112 may detect at least one SSB of said one or more first PBCH transmissions and estimate the timing, and possibly the power profile, based on the at least one detected SSB. For example, wireless ambient device 112 may estimate the timing, and possibly the power profile, based on at least one PSS symbol of the at least one detected SSB. The PSS symbol may be at a lower RF energy than the other 3 symbols of the SSB. Wireless ambient device 112 may thus detect that a received power of the at least one PSS symbol of the at least one detected SSB is smaller than a received power of other symbols in the at least one detected SSB. This pattern may be detected by an RF power detector of wireless ambient device 112, thereby speeding up the long-term averaging. If the only periodic power is from the PBCH, the long-term average may provide the PBCH power profile. Therefore, wireless ambient device 112 may determine the power profile based on a detected periodic power.

Based on the PBCH power profile, the PBCH timing may be estimated. That is, wireless ambient device 112 may estimate, based on the power profile, a timing of said one or more first PBCH transmissions and transmit, to UE 110 or wireless network node 120, one or more transmissions overlaying one or more second transmissions PBCH transmissions of wireless network node 120.

In some example embodiments, wireless ambient device 112 may estimate, based on the power profile, a periodicity of said one or more first PBCH transmissions. For example, wireless ambient device 112 may set a timer for said one or more transmissions based on the periodicity of the PBCH transmissions slots of said one or more first PBCH transmissions. That is, based on the PBCH periodicity, the tag may set a timer with t0 at the start of the PBCH.

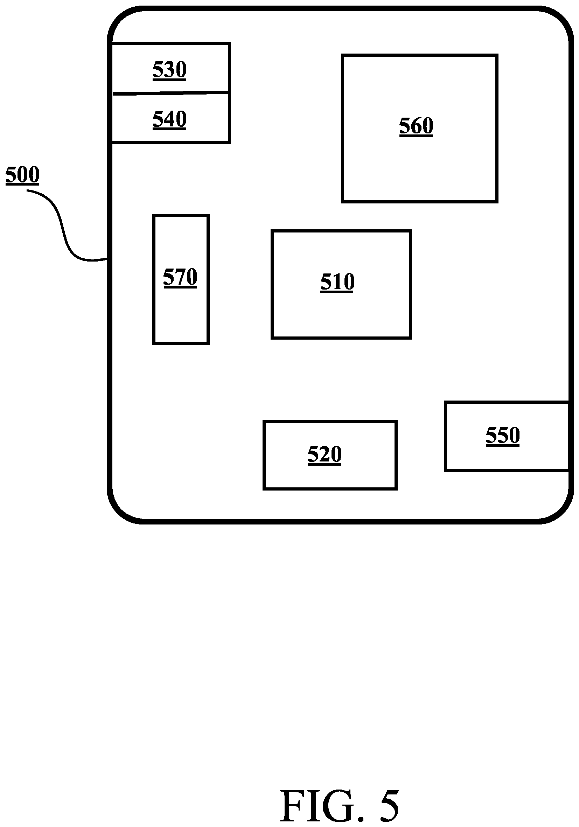

FIG. 5 illustrates an example apparatus capable of supporting at least some example embodiments. Illustrated is device 500, which may comprise, for example, UE 110, ambient wireless device 112 or wireless network node 120, or a control device configured to control the functioning thereof, possibly when installed therein. Comprised in device 500 is processor 510, which may comprise, for example, a single- or multi-core processor wherein a single-core processor comprises one processing core and a multi-core processor comprises more than one processing core. Processor 510 may comprise, in general, a control device. Processor 510 may comprise more than one processor. Processor 510 may be a control device. A processing core may comprise, for example, a Cortex-A8 processing core manufactured by ARM Holdings or a Steamroller processing core produced by Advanced Micro Devices Corporation. Processor 510 may comprise at least one Qualcomm Snapdragon and/or Intel Atom processor. Processor 510 may comprise at least one application-specific integrated circuit, ASIC. Processor 510 may comprise at least one field-programmable gate array, FPGA. Processor 510 may be means for performing method steps in device 500. Processor 510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 500 may comprise memory 520. Memory 520 may comprise random-access memory and/or permanent memory. Memory 520 may comprise at least one RAM chip. Memory 520 may comprise solid-state, magnetic, optical and/or holographic memory, for example. Memory 520 may be at least in part accessible to processor 510. Memory 520 may be at least in part comprised in processor 510. Memory 520 may be means for storing information. Memory 520 may comprise computer instructions that processor 510 is configured to execute. When computer instructions configured to cause processor 510 to perform certain actions are stored in memory 520, and device 500 overall is configured to run under the direction of processor 510 using computer instructions from memory 520, processor 510 and/or its at least one processing core may be considered to be configured to perform said certain actions. Memory 520 may be at least in part comprised in processor 510. Memory 520 may be at least in part external to device 500 but accessible to device 500.

Device 500 may comprise a transmitter 530. Device 500 may comprise a receiver 540. Transmitter 530 and receiver 540 may be configured to transmit and receive, respectively, information in accordance with at least one cellular or non-cellular standard. Transmitter 530 may comprise more than one transmitter. Receiver 540 may comprise more than one receiver. Transmitter 530 and/or receiver 540 may be configured to operate in accordance with Global System for Mobile communication, GSM, Wideband Code Division Multiple Access, WCDMA, Long Term Evolution, LTE, and/or 5G/NR standards, for example.

Device 500 may comprise a Near-Field Communication, NFC, transceiver 550. NFC transceiver 550 may support at least one NFC technology, such as Bluetooth, Wibree or similar technologies.

Device 500 may comprise User Interface, UI, 560. UI 560 may comprise at least one of a display, a keyboard, a touchscreen, a vibrator arranged to signal to a user by causing device 500 to vibrate, a speaker and a microphone. A user may be able to operate device 500 via UI 560, for example to accept incoming telephone calls, to originate telephone calls or video calls, to browse the Internet, to manage digital files stored in memory 520 or on a cloud accessible via transmitter 530 and receiver 540, or via NFC transceiver 550, and/or to play games.

Device 500 may comprise or be arranged to accept a user identity module 570. User identity module 570 may comprise, for example, a Subscriber Identity Module, SIM, card installable in device 500. A user identity module 570 may comprise information identifying a subscription of a user of device 500. A user identity module 570 may comprise cryptographic information usable to verify the identity of a user of device 500 and/or to facilitate encryption of communicated information and billing of the user of device 500 for communication effected via device 500.

Processor 510 may be furnished with a transmitter arranged to output information from processor 510, via electrical leads internal to device 500, to other devices comprised in device 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processor 510 may comprise a receiver arranged to receive information in processor 510, via electrical leads internal to device 500, from other devices comprised in device 500. Such a receiver may comprise a serial bus receiver arranged to, for example, receive information via at least one electrical lead from receiver 540 for processing in processor 510. Alternatively to a serial bus, the receiver may comprise a parallel bus receiver.

Device 500 may comprise further devices not illustrated in FIG. 5. For example, where device 500 comprises a smartphone, it may comprise at least one digital camera. Some devices 500 may comprise a back-facing camera and a front-facing camera, wherein the back-facing camera may be intended for digital photography and the front-facing camera for video telephony. Device 500 may comprise a fingerprint sensor arranged to authenticate, at least in part, a user of device 500. In some example embodiments, device 500 lacks at least one device described above. For example, some devices 500 may lack a NFC transceiver 550 and/or user identity module 570.

Processor 510, memory 520, transmitter 530, receiver 540, NFC transceiver 550, UI 560 and/or user identity module 570 may be interconnected by electrical leads internal to device 500 in a multitude of different ways. For example, each of the aforementioned devices may be separately connected to a master bus internal to device 500, to allow for the devices to exchange information. However, as the skilled person will appreciate, this is only one example and depending on the example embodiment, various ways of interconnecting at least two of the aforementioned devices may be selected without departing from the scope of the example embodiments.

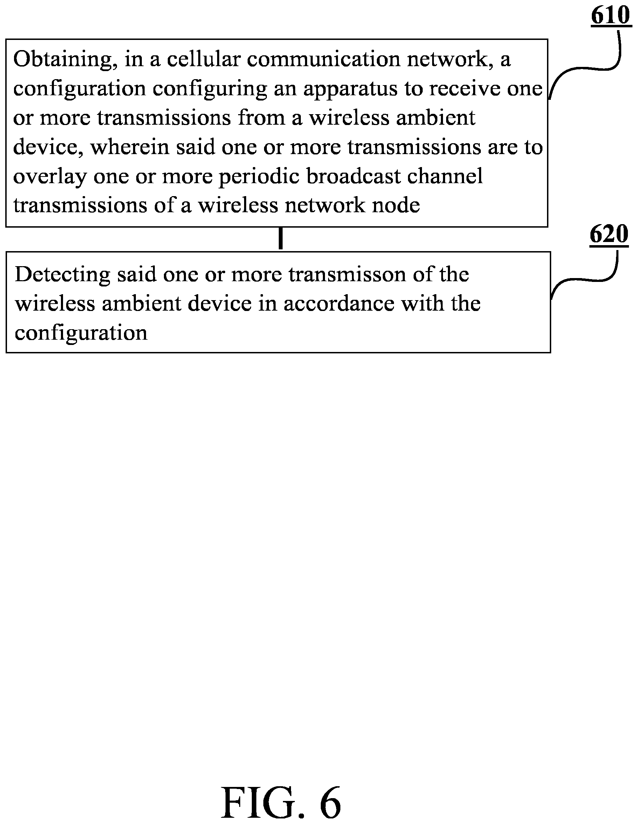

FIG. 6 is a flow graph of a first method in accordance with at least some example embodiments. The first method may be performed by an apparatus, such as UE 110 or a control device configured to control UE 110 when installed therein.

The first method may comprise, at step 610, obtaining, in a cellular communication network, a configuration configuring the apparatus to receive one or more transmissions from a wireless ambient device, wherein said one or more transmissions are to overlay one or more periodic broadcast channel transmissions of a wireless network node. The first method may also comprise, at step 620, detecting said one or more transmissions of the wireless ambient device in accordance with the configuration.

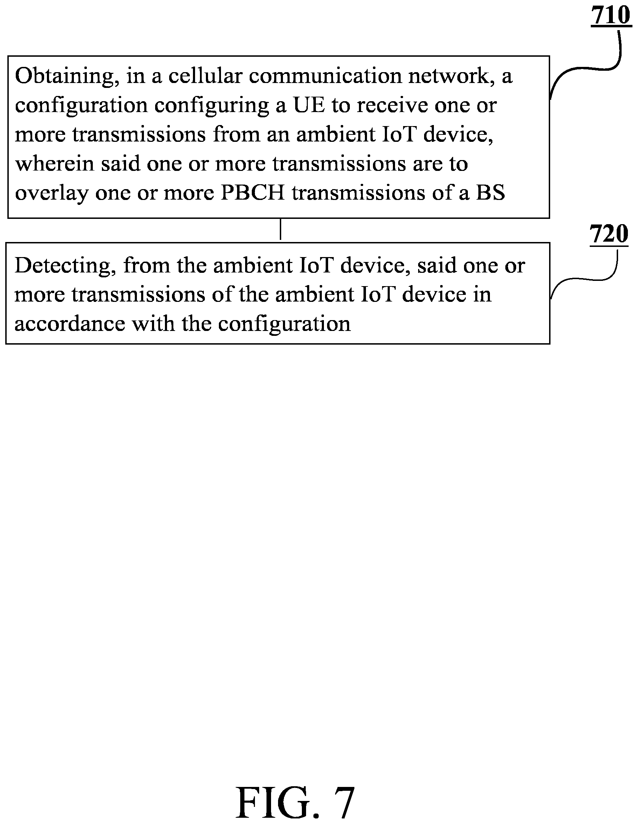

FIG. 7 is a flow graph of a second method in accordance with at least some example embodiments. The second method may be performed by an apparatus, such as UE 110 or a control device configured to control UE 110 when installed therein.

The second method may comprise, at step 710, obtaining, in a cellular communication network, a configuration configuring a UE to receive one or more transmissions from an ambient IoT device, wherein said one or more transmissions are to overlay one or more PBCH transmissions of a BS. The second method may also comprise, at step 720, detecting said one or more transmissions of the ambient IoT device in accordance with the configuration.

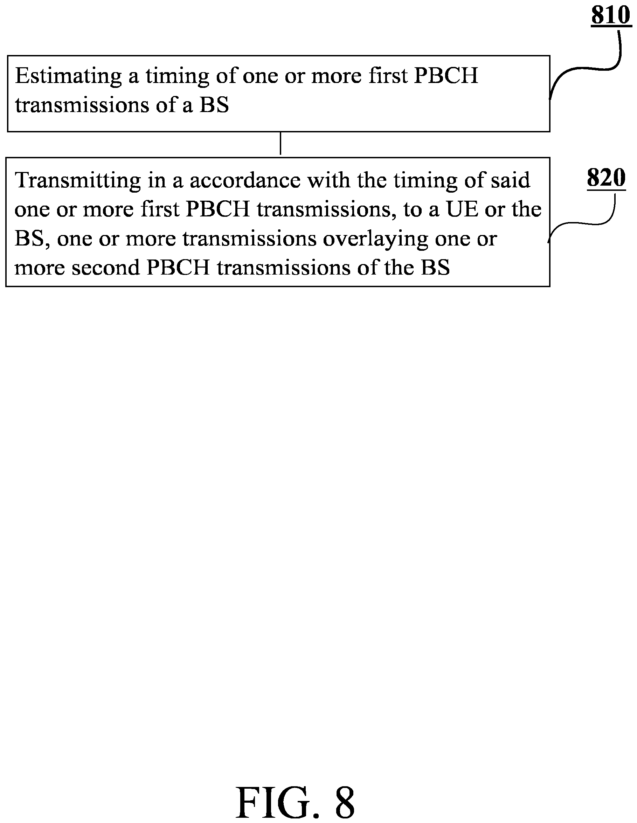

FIG. 8 is a flow graph of a third method in accordance with at least some example embodiments. The third method may be performed by an apparatus, such as wireless ambient device 112 or a control device configured to control wireless ambient device 112 when installed therein.

The third method may comprise, at step 810, estimating a timing of one or more first PBCH transmissions of a BS. The third method may also comprise, step 820, transmitting in accordance with the timing of said one or more first PBCH transmissions, to a UE or the BS, one or more transmissions overlaying one or more second PBCH transmissions of the BS.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110, wireless ambient device 112 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110, wireless ambient device 112 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication networks, for example in 3GPP networks.

### ACRONYMS LIST

- 3GPP: 3rd Generation Partnership Project
- BS: Base Station
- DO-A: Device-Originated Autonomous
- GSM: Global System for Mobile communication
- IAB: Integrated Access and Backhaul
- ID: Identity
- IoT: Internet of Things
- LMF: Location and Management Function
- LTE: Long-Term Evolution
- M2M: Machine-to-Machine
- MIB: Master Information Block
- MIMO: Multiple-Input Multiple-Output
- MTC: Machine-Type Communications
- NB-IoT: Narrowband IoT
- NFC: Near-Field Communication
- NR: New Radio
- OFDM: Orthogonal Frequency-Division Multiplexing
- PBCH: Physical Broadcast Channel
- PDCCH: Physical Downlink Control Channel
- PDSCH: Physical Downlink Shared Channel
- PRB: Physical Resource Blocks
- PSS: Primary Synchronization Signal
- QPSK: Quadrature Phase-Shift Keying
- RAT: Radio Access Technology
- RedCap: Reduced Capability
- RF: Radio Frequency
- RFID: Radio Frequency Identification
- SIB: System Information Block
- SSB: Synchronization Signal Block
- SSS: Secondary Synchronization Signal
- TRP: Transmission and Reception Point
- UE: User Equipment
- UI: User Interface
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110, 112 | UEs |
| 115, 125, 135 | Interfaces |
| 120 | Wireless network node |
| 130 | Core network |
| 210 | Intermediate node |
| 220 | Assisting node |
| 402 - 420 | Steps in FIG. 4 |
| 500 - 570 | Structure of the apparatus of FIG. 5 |
| 610 - 620 | Phases of the method in FIG. 6 |
| 710 - 720 | Phases of the method in FIG. 7 |
| 810 - 820 | Phases of the method in FIG. 8 |

## Claims

1. An ambient IoT device comprising at least one processing core and at least one memory storing instructions that, when executed by the at least one processing core, cause the apparatus at least to:
- estimate a timing of one or more first Physical Broadcast Channel, PBCH, transmissions of a base station; and
- transmit in accordance with the timing of said one or more first PBCH transmissions, to a user equipment or the base station, one or more transmissions overlaying one or more second PBCH transmissions of the base station.

2. The ambient IoT device according to claim 1, wherein the at least one processing core and at least one memory storing instructions further cause the apparatus at least to:
- determine a power profile of said one or more first PBCH transmissions of the base station; and
- estimate, based on the power profile, the timing of said one or more first PBCH transmissions.

3. The ambient IoT device according to claim 2, wherein the at least one processing core and at least one memory storing instructions further cause the apparatus at least to:
- determine the power profile by averaging a power of said one or more first PBCH transmissions.

4. The ambient IoT device according to claim 2 or claim 3, wherein the at least one processing core and at least one memory storing instructions further cause the apparatus at least to:
- estimate, based on the power profile, a periodicity of said one or more first PBCH transmissions.

5. The ambient IoT device according to claim 4, wherein the at least one processing core and at least one memory storing instructions further cause the apparatus at least to:
- set a timer for said one or more transmissions based on the periodicity of the PBCH transmissions slots of said one or more first PBCH transmissions.

6. The ambient IoT device according to any of claims 2 to 5, wherein the at least one processing core and at least one memory storing instructions further cause the apparatus at least to:
- determine the power profile based on a detected periodic power.

7. The ambient IoT device according to any of the preceding claims, wherein the at least one processing core and at least one memory storing instructions further cause the apparatus at least to:
- detect at least one synchronization signal block of said one or more first PBCH transmissions; and
- estimate the timing based on the at least one detected synchronization signal block.

8. The ambient IoT device according to claim 7, wherein the at least one processing core and at least one memory storing instructions further cause the apparatus at least to:
- estimate the timing based on at least one primary synchronization signal symbol of the at least one detected synchronization signal block.

9. The ambient IoT device according to claim 8, wherein the at least one processing core and at least one memory storing instructions further cause the apparatus at least to:
- detect that a received power of the at least one primary synchronization signal symbol of the at least one detected synchronization signal block is smaller than a received power of other symbols in the at least one detected synchronization signal block.

10. The ambient IoT device according to any of the preceding claims, wherein the at least one processing core and at least one memory storing instructions further cause the apparatus at least to:
- transmit said one or more transmissions modulated onto said one or more second PBCH transmissions.

11. The ambient IoT device according to any of the preceding claims, wherein the at least one processing core and at least one memory storing instructions further cause the apparatus at least to:
- transmit said one or more transmissions in a same pattern as said one or more first and second PBCH transmissions of the wireless network node.

12. The ambient IoT device according to any of the preceding claims, wherein said one or more transmissions comprise backscatter reports with an identity of the ambient IoT device.

13. The ambient IoT device according to any of the preceding claims, wherein the at least one processing core and at least one memory storing instructions further cause the apparatus at least to:
- determine a timing of said one or more transmissions according to a timing of reception of said one or more first PBCH transmissions.

14. The ambient IoT device according to any of the preceding claims, wherein the at least one processing core and at least one memory storing instructions further cause the apparatus at least to:
- determine, after determining a timing of reception of said one or more first PBCH transmissions, that said one or more transmissions are to be transmitted during said one or more second PBCH transmissions.

15. A method, comprising:
- estimating, by an ambient IoT device, a timing of one or more first Physical Broadcast Channel, PBCH, transmissions of a base station; and
- transmitting in accordance with the timing of said one or more first PBCH transmission, by the ambient IoT device to a user equipment or the base station, one or more transmissions overlaying one or more second transmissions PBCH transmissions of the base station.
